# EUROPEAN PATENT APPLICATION

(11) **EP 4 635 660 A1**
(43) Date of publication of application: **22.10.2025**
(21) Application number: 24170992.2
(22) Date of filing: 18.04.2024
(51) Int. Cl.: B23C 5/20, B23C 5/10, B23C 5/06

(54) **SHOULDERING INSERT, MILLING TOOL AND SHOULDER MILLING PROCESS**

(71) Applicant: Ceratizit Luxembourg Sàrl, 8232 Mamer (LU)
(72) Inventor: KISTER, Fabien, 8232 Mamer (LU); MOALLIC, Francois, 8232 Mamer (LU)
(74) Representative: Ciesla, Dirk

(57) **Abstract**

A shouldering insert (1) having a top surface (2), a bottom surface (3) and a peripheral surface (4) between the top surface (2) and the bottom surface (3), wherein the shouldering insert (1) has a cutting-edge-region (5) on parts of the top surface (2), which is non-indexable with any other regions of the top surface (2) and bottom surface (3) and is shaped by the peripheral surface (4) and the top surface (2), such that the cutting-edge-region (5) has a main cutting-edge (6), a wiping cutting-edge (7), and a ramping cutting-edge (8), wherein the top surface (2) has an asymmetrical outer contour when viewed in a top view.

## Description

The present invention relates to a shouldering insert. The present invention relates further to a milling tool and a shoulder milling process.

Milling tools for shoulder milling, such as shank-end milling tools, may advantageously be used for machining of shoulders, grooves, and edges. For the machining of pockets and the like, it is preferable to use a milling tool having a ramping cutting-edge, i.e. a cutting-edge that is closer to a central axis of the milling tool than a major cutting-edge used in the machining, and which is formed at an angle with respect to a wiping cutting-edge.

US 2018 015 554 A1 shows a milling insert intended for shoulder milling. The milling insert is indexable with two index position in that it has a two-folded rotational symmetry with two major cutting-edge portions, two surface wiping cutting-edge portions, two ramping cutting-edge portions, etc. Depending on index position, only one of the major cutting-edge portions is active at a time. This prolongs the tool life of the milling insert.

The milling insert shown in US 2018 015 554 A1 has design constraints due to its two-folded rotational symmetry. It means that the customization and/or variety of its cutting-edges and configurations is limited. This limitation impacts its suitability for shoulder milling applications, e.g. in terms of realization of steep ramping angles, customization of axial and radial support structures.

The objective of the present invention is to provide a shouldering insert, a milling tool and a shoulder milling process that overcome the geometrical limitation associated with the state of the art.

The objective is solved by the shouldering insert according to claim 1. Preferred embodiments of this shouldering insert are described in the dependent claims, which can be combined freely.

The shouldering insert has a top surface, a bottom surface and a peripheral surface between the top surface and the bottom surface, wherein the shouldering insert has a cutting-edge-region on parts of the top surface, which is non-indexable with any other regions of the top surface and bottom surface and is shaped by the peripheral surface and the top surface, such that the cutting-edge-region has a main cutting-edge, which is the only main cutting-edge of the shouldering insert, a wiping cutting-edge, which is the only wiping cutting-edge of the shouldering insert, and a ramping cutting-edge, which is the only ramping cutting-edge of the shouldering insert, wherein the top surface has an asymmetrical outer contour when viewed in a top view.

In that the cutting-edge-region is non-indexable with any other regions of the top surface and bottom surface and in that the top surface has the asymmetrical outer contour when viewed in the top view has the advantage that the shape and/or size of each of the main cutting-edge, wiping cutting-edge and/or ramping cutting-edge can be customized and/or varied without having to regard other cutting-edges. The shouldering insert deviates by the asymmetrical outer contour of the top surface when view in the top from the conventional approach of designing shouldering insert to be indexable.

In that the cutting-edge-region is non-indexable with any other regions of the top surface and bottom surface and in that the top surface has the asymmetrical outer contour when viewed in the top view means that the shouldering insert is single-sided and non-indexable.

The term "insert" is to be understood that the shouldering insert is reversibly replaceable from a tool body and needs to be mounted to the tool body to be properly operated in a shoulder milling process. The shouldering insert is not part of a monolithic milling tool, typically made completely from a cemented carbide.

In that the surface has the asymmetrical outer contour when viewed in the top view means that the outline of the top surface, which comprises the cutting-edge-region, is not symmetrical. In other words, it is not possible to associate a symmetry axis to the top surface.

The shouldering insert allows tailoring the cutting-edge geometry of the cutting-edge-region to meet precise cutting operation requirements encountered during shoulder milling.

The main cutting-edge is the primary cutting-edge and designed for removing material in the radial direction during shoulder milling.

The wiping cutting-edge is designed to improve surface finish by smoothing out the machined surface left by the main cutting-edge.

The ramping cutting-edge is designed for ramping and/or helical plunge milling, where, in each case, the shouldering insert enters the workpiece to be machined at an angle with respect to a rotation axis about which the shouldering insert is rotated.

The main cutting-edge forms typically at least partly a raised ridge-line. The wiping cutting-edge forms typically at least partly a raised ridge-line. The ramping cutting-edge forms typically at least partly a raised ridge-line.

The top surface functions at least in the vicinity the cutting-edge-region as a rake face. The top surface is the leading surface during shoulder milling with respect to the bottom surface.

The bottom surface is typically planar and thereby designed for an at least section-wise planar contact with a mounting pocket of a milling tool body.

According to a preferred embodiment the outer contour of the top surface is obtainable from a triangle having a first triangle-edge, a second triangle-edge and a third triangle-edge, in that a first triangle-tip arranged opposite to the second triangle-edge is cut-off by a first triangle-cut, in that a second triangle-tip arranged opposite to the third triangle-edge is cut-off by a second triangle-cut, in that a third triangle-tip arranged opposite to the first triangle-edge is cut-off by a third triangle-cut, wherein the first triangle-cut forms the contour of a least the wiping cutting edge, wherein the second triangle-cut is different in orientation, length and/or shape than the first triangle-cut and forms the contour of a non-cutting edge, wherein the third triangle-cut forms the counter of a further non-cutting-edge, wherein the remaining part of the first triangle-edge forms the contour of the main cutting edge, wherein the remaining part of the third triangle-edge forms at least a part of the contour of the ramping cutting edge. The asymmetry of the outer contour of the top surface is thereby obtained at least in that the second triangle-cut has the different orientation, length and/or shape than the first triangle-cut. The outer contour follows the shape of the triangle after the first, second and third triangle-cuts have been performed. The first triangle-cut is generally linear insofar it forms the contour of the wiping cutting-edge and can be generally rounded insofar it forms the contour of a rounded cutting-corner joined to the main cutting-edge. The first triangle-cut may also form a part of the contour of a part of the ramping cutting-edge. The second triangle-cut is generally linear and generally encloses an obtuse angle with the remaining part of first triangle-edge.

Preferably, a remaining part of the second triangle-edge is present and forms the contour of an even further non-cutting edge.

According to a preferred embodiment the first triangle-cut forms the contour of an inwardly extending recess of the ramping cutting-edge joined to the wiping cutting-edge. Thus, the ramping cutting-edge is inwardly recessed where it is joined to the wiping cutting-edge. It has been found that such a recess increases the stability of the cutting process during ramping and also decreases noise emissions.

According to a preferred embodiment the triangle is irregular. Thus, the first, second and third triangle sides are of different length with respect to each other.

According to a preferred embodiment the third triangle-tip encloses an acute angle. Thus, the acute angle is smaller than 90°.

According to a preferred embodiment the peripheral surface forms a radial support side on parts of the third triangle-cut. Thus, the shouldering insert can be supported to withstand radially oriented forces, i.e. forces perpendicular to an axis of rotation about which the shouldering insert can be rotated with the top surface being the leading surfaces with respect to the bottom surface.

According to a preferred embodiment the peripheral surface forms an axial support side on parts of the second triangle-cut. Thus, the shouldering insert can be supported to withstand axially oriented forces, i.e. forces parallel to an axis of rotation about which the shouldering insert can be rotated with the top surface being the leading surface with respect to the bottom surface.

According to a preferred embodiment the top surface is elongated in a direction along the main cutting-edge. This increases the relative length of the main cutting-edge.

According to a preferred embodiment a clamping engagement structure extends from the top surface in a direction towards the bottom surface, wherein the clamping engagement structure has a larger distance to the peripheral surface in a direction perpendicular to the main cutting-edge than to the peripheral surface in a direction opposite thereto. The clamping engagement structure can be a through-hole or a depression in the top surfaces. In that the distance to the peripheral surface in the direction perpendicular to the main cutting-edge is larger than to the peripheral surface in a direction opposite thereto, the main cutting-edge is supported by a relatively large material cross-section.

According to a preferred embodiment the bottom surface is planar. This increases the contact surface available to contact a base surface of a mounting pocket.

According to a preferred embodiment the bottom surface has an asymmetrical outer contour when viewed in a bottom view. This increases the freedom of design of the bottom surface, such that no regard as to be taken to any symmetry.

According to a preferred embodiment the bottom surface has an outer contour which stays in the bottom view completely within the outer contour of the top surface. This forms clearance at least on parts of the cutting-edge-region.

The objective is also solved by a milling tool according to claim 13.

The milling tool comprises a milling tool body and at least two shouldering inserts of which at least one is according to anyone the described preferred embodiments of the shouldering insert, wherein the milling tool body extends along a central milling rotation axis and has a mounting pocket to which the at least one shouldering insert to anyone of the described preferred embodiments is clamped, such that the top surface is a leading surface with respect to the bottom surface under an cutting active rotation of the milling tool body with respect to the milling rotation axis. The advantages of the shouldering insert are thereby realized as part of this milling tool.

According to a preferred embodiment the mounting pocket has a base surface and first and second support walls which extend from the base surface, wherein first support wall comprises a first abutment surface and the second support wall comprises two co-planar second abutment surfaces, wherein the bottom surface of the shouldering insert contacts the base surface, wherein the peripheral surface contacts the first abutment surface and the two co-planar second abutment surfaces.

The objective is also solved by a shoulder milling process according to claim 15.

The shoulder milling process comprises the steps of a) providing the shouldering insert according to anyone of the described preferred embodiments of the shouldering insert, b) entering the shouldering insert under a cutting rotation at an angle with respect to a milling rotation axis into a workpiece.

Further advantages of the invention will become apparent from the following description of an embodiment of the shouldering insert and the milling tool with reference to the enclosed Figures. The therein disclosed features can be incorporated in isolation or in freely selected combinations into the enclosed claims.

The Figures show:
- Fig. 1:: a perspective depiction of a shouldering insert according to an embodiment;
- Fig. 2:: a further perspective depiction of the shouldering insert according to the embodiment;
- Fig. 3:: a top view depiction of the shouldering insert according to the embodiment;
- Fig. 4:: a further perspective depiction of the shouldering insert according to a first embodiment;
- Fig. 5:: a top view depiction of the shouldering insert according to the embodiment;
- Fig. 6:: a side view depiction of the shouldering insert according to the embodiment;
- Fig. 7:: a cross-section depiction of the shouldering insert according to the embodiment and according to the cross-section line A-A in Fig. 5 and the indicated viewing direction of the cross-section line A-A;
- Fig. 8:: a perspective depiction of a milling tool according to an embodiment;
- Fig. 9:: a depiction of a mounting pocket of the milling too according to the embodiment.

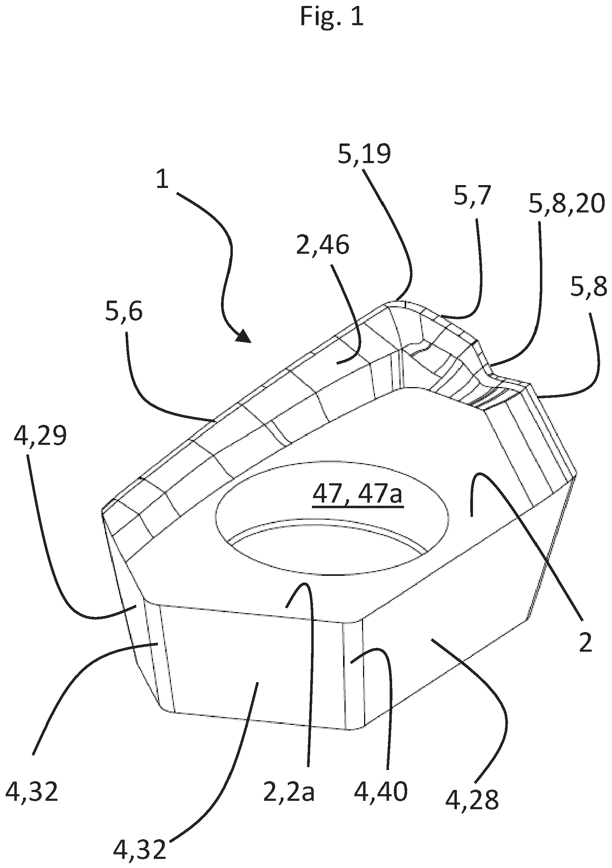

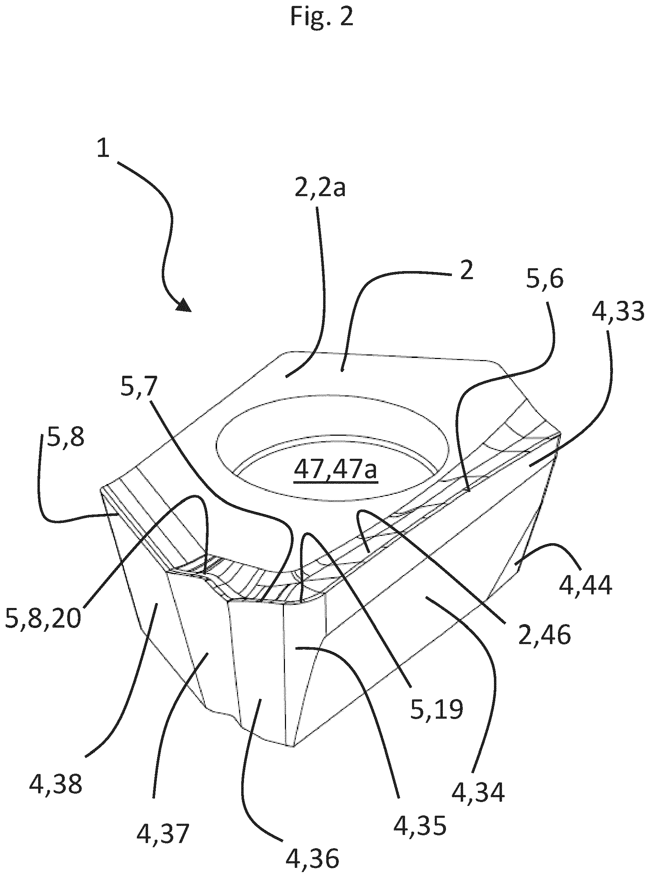

Figs. 1 to 7 show a shouldering insert 1 having a top surface 2, a bottom surface 3 and a peripheral surface 4 between the top surface 2 and the bottom surface 3, wherein the shouldering insert 1 has a cutting-edge-region 5 on parts of the top surface 2, which is non-indexable with any other regions of the top surface 2 and bottom surface 3 and is shaped by the peripheral surface 4 and the top surface 2, such that the cutting-edge-region 5 has a main cutting-edge 6, which is the only main cutting-edge 6 of the shouldering insert 1, a wiping cutting-edge 7, which is the only wiping cutting-edge 7 of the shouldering insert 1, and a ramping cutting-edge 8, which is the only ramping cutting-edge 8 of the shouldering insert 1.

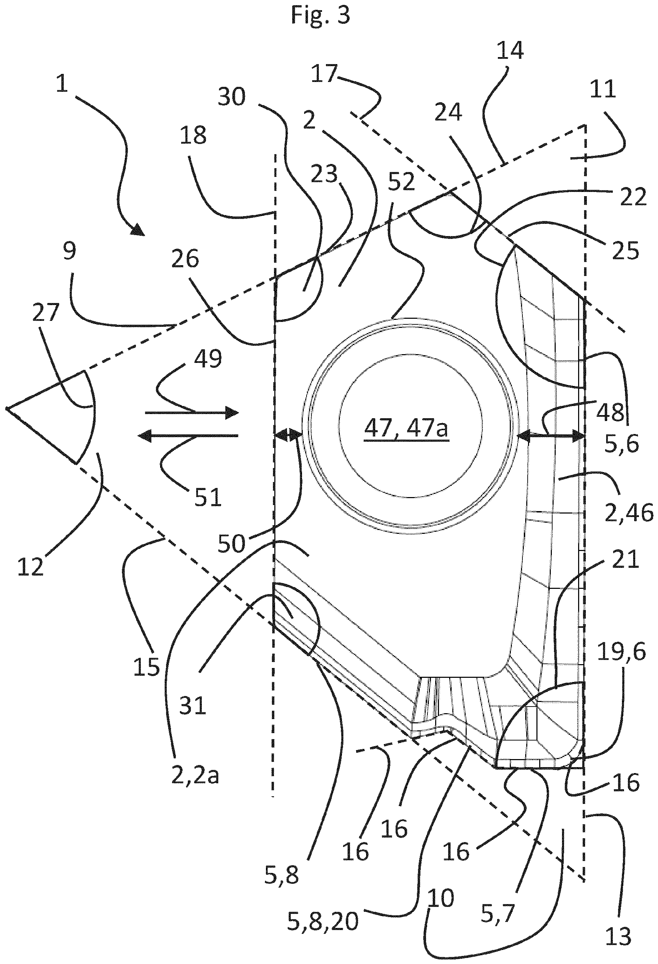

As can be seen in Fig. 3, the top surface 2 has an asymmetrical outer contour when viewed in a top view. It can further be seen in Fig. 3, that the outer contour of the top surface 2 is obtainable from a triangle 9 having a first triangle-edge 13, a second triangle-edge 14 and a third triangle-edge 15. A first triangle-tip 10 of the triangle 9 is arranged opposite to the second triangle-edge 14 and is cut-off by a first triangle-cut 16. A second triangle-tip 11 of the triangle 9 is arranged opposite to the third triangle-edge 15 and is cut-off by a second triangle-cut 17. A third triangle-tip 12 of the triangle 9 is arranged opposite to the first triangle-edge 13 and is cut-off by a third triangle-cut 18. The first triangle-cut 16 forms the contour of the wiping cutting-edge 7 and forms further the contour of a rounded cutting-corner 16 joined to the wiping-cutting edge 7 and the main cutting-edge 6 and forms even further the contour of an inwardly extending recess 20 of the ramping cutting-edge 8 joined to the wiping cutting-edge 7.

The second triangle-cut 17 has a different shape in comparison to the first triangle-cut 16. The difference in shape is because the second triangle-cut 17 is completely straight whereas the first triangle-cut 16 is has a crow-bar-shape on parts of the wiping cutting-edge 7 and the rounded cutting-corner 16 and a V-shape on parts of the inwardly extending recess 20, being part of the ramping cutting-edge 8. It is likewise possible, that the first triangle-cut 16 is completely straight. Then the difference between the first triangle-cut 16 and the second triangle-cut 17 arises from a difference in length between the first triangle-cut 16 and the second triangle-cut 17 and/or from a difference in orientation between the first triangle-cut 16 and the second triangle-cut 17. Said difference in orientation arises then from the angles 21 and 25. The angle 21 is the one enclosed by the first triangle-cut 16 and the first triangle-edge 13. The angle 22 is the one enclosed by the second triangle-cut 17 and the first triangle-edge 13. The angle 21 is 90°,but could be larger up to 95°.

As can further be seen in Fig. 3, the remaining part of the second triangle-edge 14 and thereby the non-cutting-edge 23 enclose an angle 24 with the second triangle-cut 17. The angle 24 is obtuse. The remaining part of the second triangle-edge 14 and thereby the non-cutting-edge 23 and the third triangle-cut 18 and thereby the non-cutting edge 26 enclose an angle 30. The angle 30 is obtuse. The third triangle-cut 18 and thereby the non-cutting-edge 26 and the remaining part of the third triangle-edge 15 enclose an angle 31. The angle 31 is obtuse.

As can further be seen in Fig. 3, the triangle 9 is irregular and the triangle-tip 12 has an acute angle 27, which is thereby smaller than 90°.

As can be seen for example in Fig. 1 with reference to Fig. 3, the peripheral surface 4 forms a radial support side 28 on parts of the third triangle-cut 18. The radial support side 28 is a planar surface.

As can be seen for example in Fig. 1 with reference to Fig. 3, the peripheral surface 4 forms an axial support side 29 on parts of the second triangle-cut 17. The axial support side 29 is a planar surface.

The radial support side 28 is joined to the axial support side 29 by a peripheral side 32 of the peripheral surface 4 on parts of the remaining part of second triangle-edge 14.

The peripheral surface 4 forms further an upper clearance side 33 joined to the tops surface 2 on parts of the main cutting edge 6 and a lower clearance side 34 joined to the upper clearance 34 and the bottom surface 3. The upper clearance-side 33 and the lower clearance side 34 are each a planar surface.

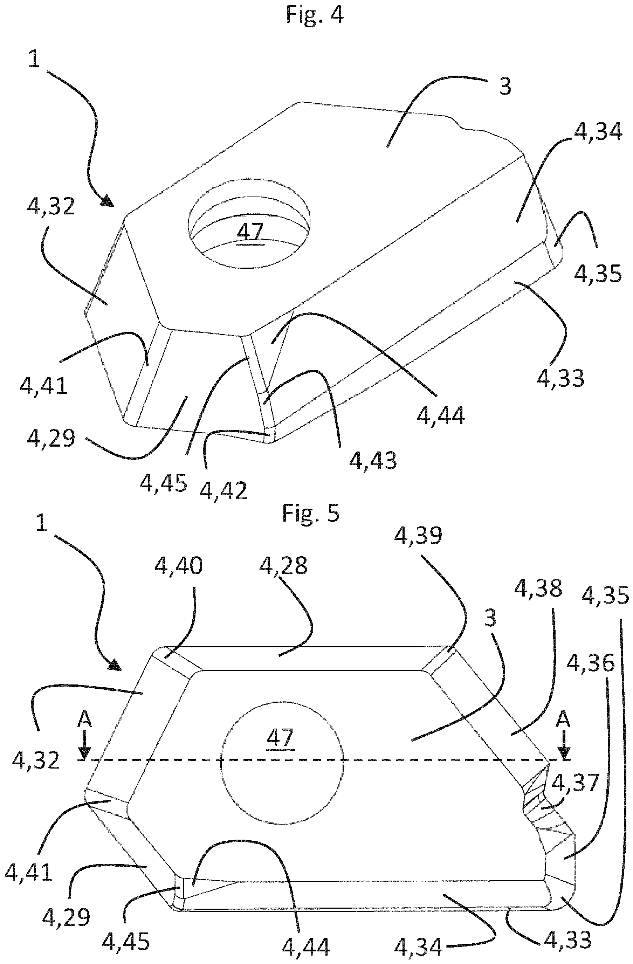

As can be seen in Fig. 5, the lower clearance side 34 and the upper clearance side 33 are both inclined towards the radial support side 28, wherein the corresponding inclination of the lower clearance side 34 is larger than the corresponding inclination of the upper clearance side 33.

The peripheral surface 4 forms further a clearance side 35 for the rounded cutting-corner 19, a clearance side 36 for the wiping cutting-edge 7, a clearance side 37 for the inwardly extending recess 20 of the ramping cutting-edge 8 and a clearance side 38 for the ramping cutting edge 8 on parts of the remaining third triangle-edge 15. As can be seen in Fig. 5, the clearance sides 33, 34, 35, 36, 37 and 38 as well as the radial support side 28, the axial support side 29 and the peripheral side 32 are each inwardly inclined. It can further be seen in Fig. 5 that the bottom surface 3 stays within the outer contour of the top surface 2.

The radial support side 28 is joined to the clearance side 38 by a rounded corner 39 of the peripheral surface 4. The radial support side 28 is joined to the peripheral side 32 by a rounded corner 40 of peripheral surface 4. The peripheral side 32 is joined to the axial support side 29 by a rounded corner 41 of the peripheral surface 4. The upper clearance side 33 is joined to the axial support side 29 by an upper rounded corner section 42 of the peripheral surface 4. The lower clearance side 34 is joined to the support side 29 by a middle rounded corner-section 43 of the peripheral surface 4. The lower clearance side 34 has on parts of the axial support side 29 a triangular bevel side 44. The triangular bevel side 44 is joined to the axial support side 29 by a lower rounded corner-section 45.

Reverting to the top surface 2, the top surface 2 has a rake face portion 46 declining from the main cutting-edge 6, the rounded cutting-corner 19, the wiping cutting-edge 7 and the ramping cutting-edge 8. The cutting edge-portion 5 and thereby the main cutting-edge 6, the rounded cutting-corner 19, the wiping cutting-edge 7 and the ramping cutting edge 8 form a ridge-line with respect to the top surface 2 by means of said decline of the rake face portion 46. The top surface 2 is elongated in a direction along the main cutting-edge 6, as can be seen in Fig. 3.

As can be seen for example in Fig. 3, a clamping engagement 47 structure extends in terms of a through hole 47a from the top surface 2 in a direction towards the bottom surface 3; it is likewise possible that the clamping engagement structure 47 extends in terms of a depression in and of the top surface 2 towards the bottom surface 3, leaving the bottom surface 3 uninterrupted by the clamping engagement structure 47. As can be seen in Fig. 3 together with Fig. 5, the clamping engagement structure 47 has a distance 48 to the peripheral surface 4 in a direction 49 perpendicular to the main cutting-edge 6 and a distance 50 to the peripheral surface 4 in a direction 51 opposite and parallel to the direction 49. The distances 48 and 50 are measured with respect to an outer circular rim 52 of the clamping engagement 47, each time to a nearest point of the peripheral surface 4 positioned half-way between the top surface 2 and the bottom surface 3, where they are planar, and diametrically with respect to each other, i.e. along a diameter-cut perpendicular to the main cutting-edge 6; the top surface 2 has a planar section 2a outside of the rake face portion 46.

Since the distance 48 is larger than the distance 50, the shouldering insert 1 provides on a relative basis more material to support the main cutting-edge 6 than to support the radial support-side 28. The corresponding arrangement of the clamping engagement structure 47 and thereby its example realization in terms of the through hole 47a is enabled for by the asymmetric outer contour of the top surface, since no regards have to be taken to symmetry considerations.

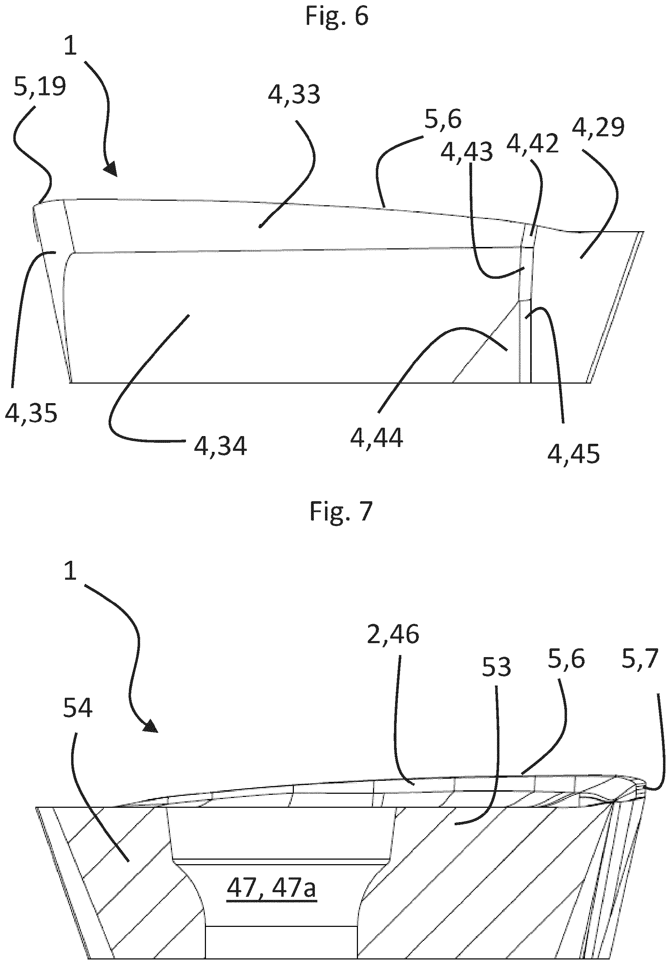

Fig. 7 shows a cross-section through the shouldering insert according to the cross-section line A-A in Fig. 5. Fig. 7 highlights that due to the position of the clamping engagement structure 47 closer to the axial support 29 side and thereby its example realization in terms of the through hole 47a in a direction along the main cutting-edge 6 a material cross-section 53 on parts of the wiping cutting-edge 7 and thereby the ramping cutting-edge 8 is area-wise increased with respect to a material cross-section 54 on parts of the axial support side 29. Thus, the wiping-cutting edge 7 and thereby the ramping cutting-edge 8 are material-wise strengthened on a relative basis with respect to the axial support side 29; likewise the main cutting-edge 6 is material-wise strengthened on a relative basis with respect to the radial support side 28 because the clamping engagement structure 47 is positioned closer to the radial support side 28 in a direction perpendicular to the main cutting edge 6.

The shouldering insert 1 is preferably made from a sintered cemented carbide.

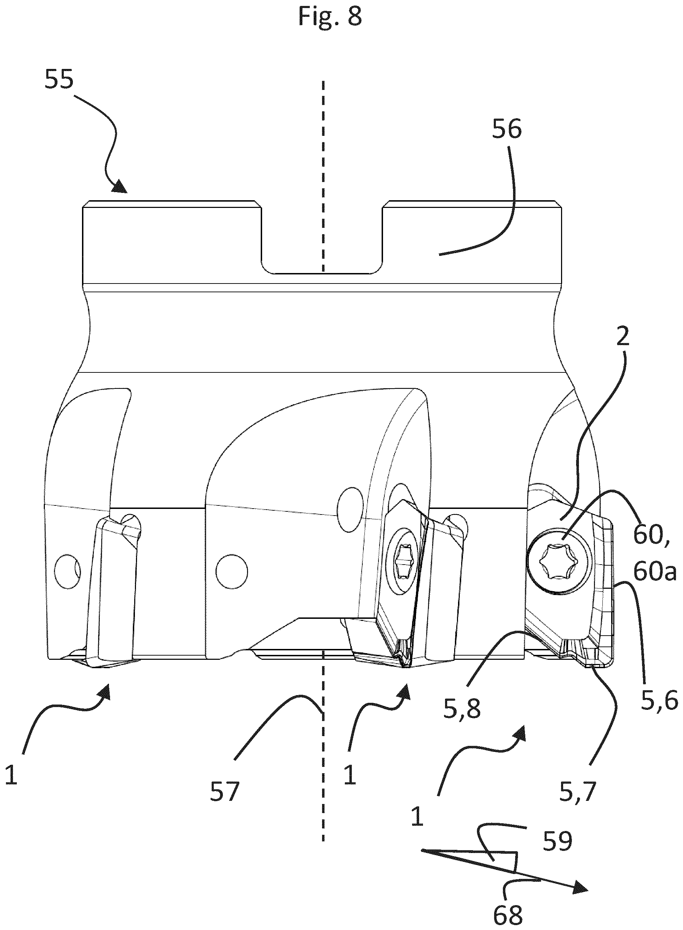

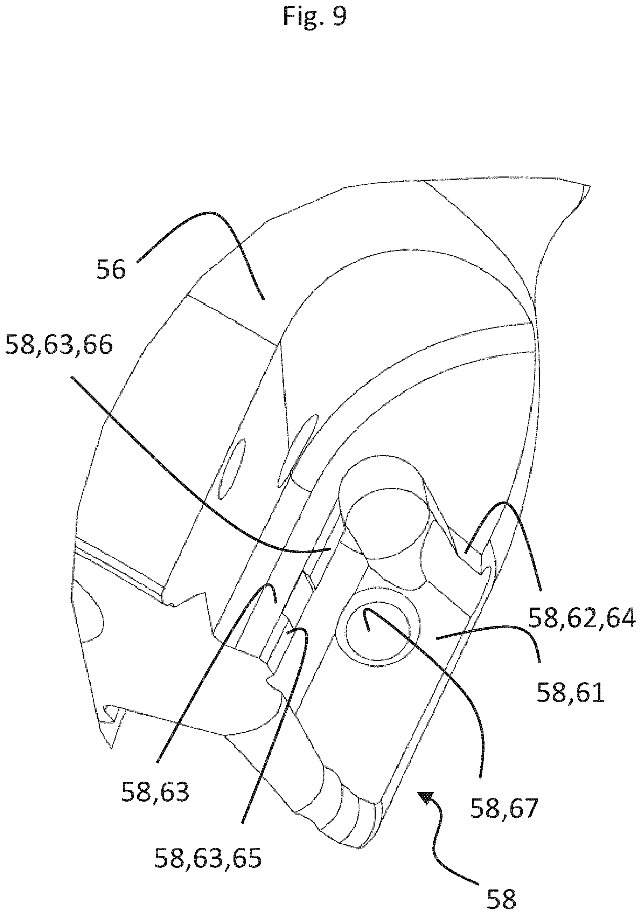

Fig. 8 shows a milling tool 55. The milling tool 55 comprises a milling tool body 56 which extends along a central milling rotation 57. The milling tool body 56 is preferably made from a steel and has a plurality of mounting pockets 58, i.e. at least two mounting pockets 58, to each of which a shouldering insert 1 according to the embodiment described with reference to Figs. 1 to 7 is clamped; one of these mounting pockets 59 is shown in Fig. 9 without the shouldering insert 1. The shouldering inserts 1 are each clamped to one of the mounting pockets 59 by a clamping element 60 in terms of a screw 60a inserted into the clamping engagement structure 47, such that the top surface 2 is a leading surface with respect to the bottom surface 3 under a cutting active rotation of the milling tool body 56 with respect to the milling rotation axis 57; cutting-active rotation means that the cutting-edge-region 5 can cut into a workpiece during said rotation.

Fig. 9 shows representatively for each of the mounting pockets 58 that each mounting pocket 58 has a base surface 61 and a first support wall 62 and a second support wall 63 which each extend from the base surface 58. The first support wall 62 comprises a first abutment surface 64 for contacting and being in contact with the axial support side 29 when the shouldering insert 1 is clamped to the mounting pocket 58. The second support 63 wall comprises two co-planar second abutment surfaces 65 and 66 for contacting and being in contact with the radial support side 28 when the shouldering insert 1 is clamped to the mounting pocket 58. The base surface 58, which is planar, contacts the bottom surface 3 when the shouldering insert 1 is clamped to the mounting pocket 58.

The base surface 58 includes a pocket clamping bore 67 into which the clamping element 60 is inserted and engaged.

With reference to Fig. 8 a shoulder milling process will be described. The shoulder milling process comprises the steps of providing the shouldering insert 1 according to the described embodiment, preferably as a part of the milling tool 55 in the described manner and clamped into one of the mounting pockets 58, and the step of entering the shouldering insert 1 under said cutting rotation at an angle 59 with respect to the milling rotation axis 57 into a workpiece and along a ramping direction 68. Once these steps are completed, i.e. the motion along the direction 67, the shoulder milling process proceeds in that the shouldering insert 1 is moved under said cutting rotation in a direction perpendicular to the milling rotation axis 57.

The present invention is not limited to the shouldering insert 1 and the milling tool 55.

The shouldering insert 1 can also be realized without the clamping engagement structure 47. The outer contour of the top surface 2 can be different from the outer contour obtainable by cutting-off the triangle-tips 10, 11 and 12 in the manner described with reference to Fig. 3 if the remaining triangle-edges of the triangle 9 and the newly created edges from three triangle-cuts cutting of said triangle tips 10, 11 and 12 yield an asymmetric outer contour of the top surface 2 and maintain a cutting-edge region which can be similar or different from the cutting edge-region 6 but must maintain a main cutting edge 6, a wiping cutting edge 7 and a ramping cutting edge 8 and must maintain to be non-indexable with any other regions of the top surface 2 and bottom surface 3 and must maintain to be shaped by the peripheral surface 4 and the top surface 2, such that the main cutting-edge 6 is the only main cutting-edge 6 of the shouldering insert 1, the wiping cutting-edge 7 the only wiping cutting-edge 7 of the shouldering insert 1, and the ramping cutting-edge 8 the only ramping cutting-edge 8 of the shouldering insert 1; the ramping cutting-edge can be realized with or without the inwardly extended cutting portion 20.

The mounting-pockets 58 can likewise be designed differently if they allow for an axial support of the peripheral surface 4, a radial support of the peripheral surface 4 and for a support of the bottom surface 2 and if the top surface 2 is arranged to be a leading surface with respect to the bottom surface 3 and the cutting active rotation.

## Claims

1. A shouldering insert (1) having a top surface (2), a bottom surface (3) and a peripheral surface (4) between the top surface (2) and the bottom surface (3), wherein the shouldering insert (1) has a cutting-edge-region (5) on parts of the top surface (2), which is non-indexable with any other regions of the top surface (2) and bottom surface (3) and is shaped by the peripheral surface (4) and the top surface (2), such that the cutting-edge-region (5) has a main cutting-edge (6), which is the only main cutting-edge (6) of the shouldering insert (1), a wiping cutting-edge (7), which is the only wiping cutting-edge (7) of the shouldering insert (1), and a ramping cutting-edge (8), which is the only ramping cutting-edge (8) of the shouldering insert (1), **characterized in that** the top surface (2) has an asymmetrical outer contour when viewed in a top view.

2. Shouldering insert (1) according to claim 1, wherein the outer contour of the top surface (2) is obtainable from a triangle (9) having a first triangle-edge (13), a second triangle-edge (14) and a third triangle-edge (15), in that a first triangle-tip (10) arranged opposite to the second triangle-edge (14) is cut-off by a first triangle-cut (16), in that a second triangle-tip (11) arranged opposite to the third triangle-edge (15) is cut-off by a second triangle-cut (17), in that a third triangle-tip (12) arranged opposite to the first triangle-edge (13) is cut-off by a third triangle-cut (18), wherein the first triangle-cut (16) forms the contour of a least the wiping cutting-edge (7), wherein the second triangle-cut (17) is different in orientation, length and/or shape than the first triangle-cut (16) and forms the contour of a non-cutting edge (25), wherein the third triangle-cut (18) forms the counter of a further non-cutting-edge (26), wherein the remaining part of the first triangle-edge (13) forms the contour of the main cutting edge (6), wherein the remaining part of the third triangle-edge (15) forms at least a part of the contour of the ramping cutting edge (8).

3. Shouldering insert (1) according to claim 2, wherein the first triangle-cut (16) forms the contour of an inwardly extending recess (20) of the ramping cutting-edge (8) joined to the wiping cutting-edge (7).

4. Shouldering insert (1) according to claim 2 or 3, wherein the triangle (9) is irregular.

5. Shouldering insert (1) according to any one of claims 2 to 4, wherein the third triangle-tip (12) encloses an acute angle (27).

6. Shouldering insert (1) according to any one of claims 2 to 5, wherein the peripheral surface (4) forms a radial support side (28) on parts of the third triangle-cut (18).

7. Shouldering insert (1) according to any one of claims 2 to 6, wherein the peripheral surface (4) forms an axial support side (29) on parts of the second triangle-cut (17).

8. Shouldering insert (1) according to any one of the preceding claims, wherein the top surface (2) is elongated in a direction along the main cutting-edge (8).

9. Shouldering insert (1) according to any one of the preceding claims, wherein a clamping engagement structure (47) extends from the top surface (2) in a direction towards the bottom surface (3), wherein the clamping engagement structure (47) has a larger distance (48) to the peripheral surface (4) in a direction (49) perpendicular to the main cutting-edge (6) than to the peripheral surface (4) in a direction (51) opposite thereto.

10. Shouldering insert according to any one of the preceding claims, wherein the bottom surface (3) is planar.

11. Shouldering insert (1) according to any one of the preceding claims, wherein the bottom surface (3) has an asymmetrical outer contour when viewed in a bottom view.

12. Shouldering insert (1) according to claim 11, wherein the bottom surface (3) has an outer contour which stays in the bottom view completely within the outer contour of the top surface (2).

13. Milling tool (55) comprising a milling tool body (56) and at least two shouldering inserts (1) of which at least one is according to at any one of the preceding claims, wherein the milling tool body (56) extends along a central milling rotation axis (57) and has a mounting pocket (58) to which the at least one shouldering insert (1) according to any one of the preceding claims is clamped, such that the top surface (2) is a leading surface with respect to the bottom surface (3) under a cutting active rotation of the milling tool body (56) with respect to the milling rotation axis (57).

14. Milling tool (55) according to claim 13, wherein the mounting pocket (58) has a base surface (61) and first and second support walls (62,63) which extend from the base surface (61), wherein first support wall (62) comprises a first abutment surface (64) and the second support wall (63) comprises two co-planar second
abutment surfaces (65,66), wherein the bottom surface (2) of the shouldering insert (1) contacts the base surface (61), wherein the peripheral surface (4) contacts the first abutment surface (64) and the two co-planar second abutment surfaces (65,66).

15. Shoulder milling process, comprising the steps of a) providing the shouldering insert (1) according to any one of the claims 1 to 12, b) entering the shouldering insert (1) under a cutting rotation at an angle (59) with respect to a milling rotation axis (57) into a workpiece.
